# EUROPÄISCHE PATENTSCHRIFT

(11) **EP 0 682 472 B1**
(45) Veröffentlichungstag und Bekanntmachung des Hinweises auf die Patenterteilung: **09.04.1997**
(21) Anmeldenummer: 94905690.7
(22) Anmeldetag: 24.01.1994
(51) Int. Cl.: A01N 37/02

(54) **VERFAHREN ZUR BEKÄMPFUNG VON LEPIDOPTEREN MIT (E,Z)8-TETRADECENYLACETAT, UND VERFAHREN ZU DESSEN HERSTELLUNG**
METHOD OF CONTROLLING LEPIDOPTERA WITH (E,Z)8-TETRADECENYL ACETATE, AND METHOD OF PREPARING IT
METHODE DE LUTTE CONTRE LES LEPIDOPTERES AVEC (E,Z)8-TETRADECENYLACETATE,ET PROCEDE POUR SA FABRICATION

(30) Priorität: 04.02.1993 DE 4303079
(43) Veröffentlichungstag der Anmeldung: 22.11.1995
(73) Patentinhaber: BASF Aktiengesellschaft, 67063 Ludwigshafen (DE)
(72) Erfinder: BUSCHMANN, Ernst, D-67069 Ludwigshafen (DE); KLEIN, Ulrich, D-67177 Limburgerhof (DE); NEUMANN, Ulrich, D-67105 Schifferstadt (DE); RENZ, Guenter, D-68309 Mannheim (DE)
(86) Internationale Anmeldenummer: EP9400178
(87) Internationale Veröffentlichungsnummer: WO9417662

(56) Entgegenhaltungen:
- DE-A- 4 006 919
- US-A- 4 844 916
- CROP PROTECTION AGENTS 1977 Seiten 223 - 233 A.K.MINKS ET. AL. 'Attractants and inhibitors of Lepidoptera: Field evaluation of pheromones and related compounds' in der Anmeldung erwähnt
- THE CANADIAN ENTOMOLOGIST Bd. 124 , November 1991 , CA Seiten 1391 - 1394 H.MCBRIEN ET. AL. 'sex pheromone components of the eyespotted bud moth Spilonota ocellana'
- ENTOMOL. EXP. APPL. Bd. 60 , 1991 Seiten 219 - 223 P.WITZGALL ET. AL. 'Sex pheromones of Spilonota ocellana and Spilonota laricana'
- OLFACTION AND TASTE Bd. 6 , 1977 Seiten 333 - 341 E.PRIESNER 'Evolutionary potential of specialised olfactory receptors' in der Anmeldung erwähnt
- CROP PROTECTION AGENTS 1977 Seiten 223 - 233 A.K.MINKS ET. AL. 'Attractants and inhibitors of Lepidoptera: Field evaluation of pheromones and related
- compounds' in der Anmeldung erwähnt

## Beschreibung

Die vorliegende Erfindung betrifft ein Verfahren zur Herstellung einer synthetischen Mischung enthaltend Z8-Tetradecenylacetat (Ia) und E8-Tetradecenylacetat (Ib)

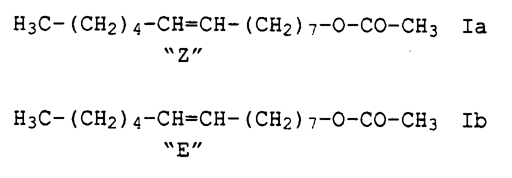

Verfahren zur Bekämpfung von Planzenschädlingen aus der Ordnung Lepidoptera mittels einer solchen Mischung und ihre Verwendung.

Aus der Literatur ist Z8-Tetradecenylacetat als Pheromon von Spilonota laricana (Priesner, Olfaction and Taste 6, 333 (1977) Spilonota ocellana (H. Arn, Experientica 30 1142 1974), Planotortrix excessana (Galbreath, Z. Naturforsch. 40c, 266 (1985) und Ctenopseustis obliquana (Young, Z. Naturforsch. 40c, 262, 1985) bekannt.

Minks et. al. identifizierten eine Mischung aus Z8-Tetradecenylacetat und E8-Tetradecenylacetat als Pheromon von Spilonota ocellana (Crop. Pr. Agents 1977, 223).

Der Rote Knospenwickler (S. ocellana) zählt neben dem Apfelwickler (Cydia pomonella) und dem Fruchtschalenwickler (Adoxophyes orana) zu den Hauptschädlingen im europäischen Apfelanbau. S. ocellana ist auch in Nordamerika eingewandert und tritt besonders dann auf, wenn der Apfelwickler (Cydia pomonella) mit selektiven Mitteln bekämpft wurde. Im Rahmen des integrierten Pflanzenschutzes können C. pomonella und A. orana mit nützlingsschonenden Mitteln bekämpft werden. Gesucht werden analoge Verfahren zur Bekämpfung von S. ocellana.

Es ist bekannt, daß bei Schmetterlingen von paarungsbereiten weiblichen Tieren Sexuallockstoffe (Pheromone) erzeugt und in die Umgebung ausgeschieden werden. Männliche Schmetterlinge derselben Art können dann mit Hilfe dieses Riechstoffes die Weibchen auffinden. Grundsätzlich gibt es drei verschiedene Möglichkeiten, Sexuallockstoffe (Pheromone) von Schmetterlingen im Pflanzenschutz anzuwenden:
1. Monitortechnik
   Sogenannte Pheromonfallen, bestückt mit synthetischen Sexuallockstoffködern werden in den Befallsgebieten ausgehängt. Der Fallenfang von männlichen Faltern erbringt den Nachweis des Auftretens des Schädlings. Außerdem lassen sich Hinweise zur Befallsstärke und auf den richtigen Zeitpunkt der Bekämpfung ableiten.
2. Abfangtechnik
   Man kann den Lockstoff mit insektiziden Wirkstoffen kombinieren. Es besteht die Möglichkeit, dem Köder oder der Falle, Insektizide zuzusetzen oder aber die unmittelbare Umgebung der Falle zu behandeln. Damit kann dann der größte Teil, der aus weiter Entfernung angelockten männlichen Falterbevölkerung abgetötet werden.
3. Paarungsstörungstechnik
   Durch geeignete Dispenser stellt man eine gleichmäßige Verteilung des Sexualpheromons im Befallsgebiet sicher. Die männlichen Schmetterlinge werden dadurch am Auffinden der Weibchen gestört. Die Paarung unterbleibt. Der Schädlingsbefall geht zurück.
   Zahlreiche Sexualpheromone von Schmetterlingen wurden in der Vergangenheit isoliert und für das Monitoring als hochwirksame Lockstoffe eingesetzt. Nur wenige dieser Lockstoffe lassen sich für die Paarungsstörungsmethode verwenden. M. Kehat et al. (Phytoparasitica 13, 215 - 220 (1985)) erzielten sehr schlechte Ergebnisse bei Versuchen zur Paarungsstörung mit dem Pheromon von Spodoptera littoralis. C. P. Whittle und T. E. Bellas (Chemistriy in Australia 198 - 201 (1988)) verweisen darauf, daß die Gründe für den vielfachen Mißerfolg der Paarungsstörungsmethode wissenschaflich nicht begründbar sind. J. Möhl (Beitr. Ent., Berlin, 200ff, 1985) berichtet, daß bei mehr als 20 Schmetterlingsarten versucht wurde, die Paarung mit Sexualpheromonen zu stören. Es konnten jedoch nur bei einzelnen Arten Erfolge erzielt werden. Vergebliche Versuche mit dem Pheromon von Adoxophyesarten berichtet Y. Tamaki (J. Appl. Entomol. Zool. 27, 124 - 130 (1983).
   Eine neue Monographie zum Thema; Insektenpheromone im Pflanzenschutz, J. Wiley and Sons, 1989, Herausgeber A. R. Jutsum, R. F. S. Gordon berichtet von zahlreichen Fehlschlägen z. B. D. G. Campion auf S. 92: "Obwohl viele Pheromone jetzt isoliert worden sind, wird nur über wenige erfolgreiche Paarungsstörungsversuche berichtet. Eine Ausnahme ist der Pink bollworm." S. 113: "Kontrolle des bekreuzten Traubenwicklers war in einigen Gebieten erfolgreich in anderen nicht." S. 114: "Bei Heliothisarten kein Erfolg oder unklare Ergebnisse; bei Spodopteraarten war die Paarungsstörungstechnik schwierig."
   C. S. Sanders auf S. 328: "Mit hunderten von Sexualpheromonen wurde die Paarungsstörungstechnikerprobt. Die Zahl der Erfolge ist sehr begrenzt."
   Als Grund für die vielen Fehlschläge wird auf S. 340 - 341 das mangelnde Verstehen der biologischen Zusammenhänge angesehen.
   Nach W. Roelofs (J. Chem. Ecol. 4, 685 - 698 (1978)) sind diejenigen Substanzen für die Paarungsstörung gut geeignet, die optimale Lockwirkung besitzen.
   Voraussetzung für die Durchführung der Paarungsstörungsmethode ist die Verfügbarkeit von größeren Mengen Pheromonwirkstoff. Die bisher publizierten Verfahren zur Herstellung benötigen zahlreiche Reaktionsschritte und sind deshalb für die Herstellung von Kilogramm-Mengen ungeeignet, insbesondere wenn man wirtschaftliche Erwägungen berücksichtigt.

Der vorliegenden Erfindung lag daher die Bereitstellung von wirtschaftlich sinnvollen Mitteln und Methoden zur Bekämpfung von Planzenschädlingen aus der Ordnung Lepidoptera, insbesondere des Roten Knospenwicklers (Spilonota ocellana), als Aufgabe zugrunde.

Demgemäß wurde das eingangs beschriebene Verfahren zur Herstellung einer synthetischen Mischung sowie deren Verwendung gefunden.

Die Herstellung der vorstehend beschriebenen Mischung erfolgt in an sich bekannter Weise (DE-A 40 06 919) dadurch, daß man Hexanal (II) in Gegenwart einer Base mit 8-Hydroxyoctyl-triphenylphosphoniumbromid (III) in eine Mischung aus Z8-Tetradecenol IVa und Z8-Tetradecenol IVb überführt und diese Mischung anschließend mit Essigsäureanhydrid acetyliert.

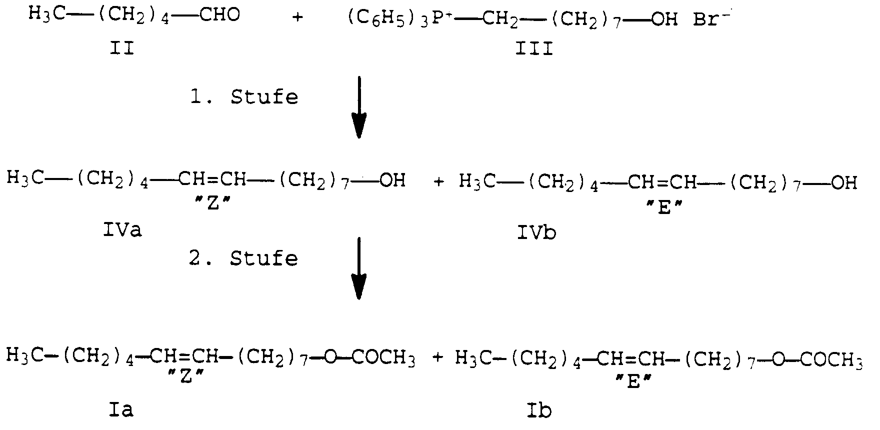

Die Verfahrensschritte werden im einzelnen beispielsweise wie folgt ausgeführt:

### 1. Stufe: Wittig-Umsetzung

Diese Umsetzung wird üblicherweise bei Temperaturen von -20 bis 100°C, vorzugsweise 0 bis 50°C in Gegenwart einer Base durchgeführt. Geeignete Lösungsmittel sind Säureamide wie Dimethylformamid, Dimethylacetamid, N-Methylpyrrolidon, Dimethylsulfoxid, Tetrahydrofuran, Dioxan, Alkohole wie Isobutanol, tert.-Butanol, n-Pentanol, aromatische Kohlenwasserstoffe wie Benzol oder Toluol, halogenierte Kohlenwasserstoffe wie Methylenchlorid oder Chlorbenzol.

Als Basen dienen vorzugsweise niedermolekulare Alkohole wie Natriummethylat, Natriumethylat, Kalium-tert.-butylat, sowie Alkalihydroxide oder Natriumcarbonat bei Verwendung eines Zweiphasensystems. Daneben können Basen wie Butyllithium, Alkalihydride oder Alkaliamide verwendet werden, wobei die Reaktion ggf. unter Schutzgas durchgeführt wird. Die Basenmenge ist nicht besonders kritisch. Üblicherweise werden pro Mol Phosphoniumbromid stochiometrische Mengen der Base oder ein geringer Überschuß z. B. 1 bis 20 Mol-% verwendet. Nach Zugabe der Base wird n-Hexanal in aquimolarer Menge oder im 10 bis 20 %igem Unterschuß zudosiert.

In Abhängigkeit von Base, Reaktionstemperatur und Lösungsmittel entstehen dabei unterschiedliche Z/E-Zusammensetzungen.

### 2. Stufe Acetylierung

Die Umsetzung wird überlicherweise bei Temperaturen von -10 bis 150°C, vorzugsweise 0 bis 120°C durchgeführt. Geeignete Acetylierungsmittel sind Acetanhydrid, Acetylchlorid, Acetylbromid oder auch Essigsäure. Die Umsetzung erfolgt mit molaren oder katalytischen Mengen an Base (z.B. Triethylamin, Pyridin, 4-Dimethylaminopyridin) oder auch mit katalytischen Mengen an Säure wie HCl, Essigsäure, Schwefelsäure in einem geeigneten Lösungsmittel wie Kohlenwasserstoffen (Toluol, Xylol, Chlorbenzol, Ligroin) Ethan (Dibutylether, TMF), Chlorkohlenwasserstoffen oder auch lösungsmittelfrei.

Das für die Herstellung der Mischung als Ausgangsverbindung benötigte Hexanal (II) ist kommerziell erhältlich; das ebenfalls benötigte Phosphoniumsalz (III) ist in üblicher Weise durch Umsetzung von 8-Bromoctanol und Triphenylphosphin erhältlich.

Beispielsweise geht man dabei wie folgt vor: 8-Bromoctanol und Triphenylphosphin werden solange gemeinsam in einem geeigneten Lösungsmittel erwärmt, bis ein vollständiger Umsatz erreicht ist (beispielsweise HPLC oder DC Kontrolle). Das gebildete Phosphoniumsalz kann nach dem Entfernen des Lösungsmittels im allgemeinen durch Verreiben mit Essigsäureethylester kristallin erhalten werden. Für diese Umsetzung eignen sich als Lösungsmittel insbesondere Alkohole, wie Ethanol, Butanol, Isobutanol und Pentanol, Säureamide wie Dimethylformamid, N-Methylpyrolidon und Dimethylacetamid sowie Dimethylsulfoxid und Acetonitril oder Gemische der genannten Lösungsmittel oder chlorierte Kohlenwasserstoffe.

Die nach dem vorstehend geschilderten Verfahren erhältliche Mischung aus Z8-Tetradecenylacetat (Ia) und E8-Tetradecenylacetat (Ib) eignet sich zur Bekämpfung von Planzenschädlingen aus der Ordnung Lepidoptera, insbesondere des Roten Knospenwicklers (Spilonota ocellana), wobei der Bekämpfung mittels der Paarungsstörungsmethode eine besondere Bedeutung zukommt.

Das Gemisch kann zusammen mit üblichen Hilfsstoffen, z.B. entsprechend präparierten Streifen aus Kunststoff, Bindegarnen, lockstoffgefüllten Ampullen o.ä. (beispielsweise gemäß DE-A 36 40 880 oder DE-A 41 01 878.8) angewendet werden und auch herstellungsbedingte Verunreinigungen enthalten.

Zur Formulierung des Gemisches kommen sowohl flüssige wie auch feste Präparationen in Frage. Als Lösungsmittel kommen hochsiedende, aromatische, aliphatische oder cycloaliphatische Verbindungen in Betracht. Neben Kohlenwasserstoffen eignen sich Ester, Ether oder Ketone besonders gut. Typische Vertreter dieser Klassen sind z.B. Xylol, Methylnaphthaline, Paraffinöle, Cyclohexanon, Ethylglykolacetat, Isophoron und Dibutylphthalat. Diese Lösungsmittel können allein oder in Mischungen mit anderen Komponenten Verwendung finden. Die den Verbindungen Ia und Ib entsprechenden gesättigten C₁₄-Alkohole und -Ester sowie deren Homologe (Tetradecanol, Tetradecanylacetat, Pentadecanol und Pentadecanylacetat) sind besonders geeignete Formulierungshilfsmittel und können als Synergisten angesehen werden, da sie die Wirkung von Ia und Ib verstärken.

Weiterhin können Lösungen in pflanzlichen, tierischen oder synthetischen Ölen oder Fetten und anderen verdunstungshemmenden Lösungsmittel mit niedrigem Dampfdruck wie z.B. Dioctylphthalat zum Zwecke der Wirkungsverlängerung hergestellt werden.

Des weiteren ist es möglich, das Gemisch in oder an natürliche oder synthetische feste Träger wie Gummi, Kork, Zellulose, Kunststoffe, gemahlene Kohle, Holzmehl, Silikate, Bimskies, gebrannten Ton oder ähnliche feste Trägerstoffe zu binden oder in speziellen Kapselformulierungen oder Kunststoffbehältern einzusetzen, um so eine gleichmäßige Abgabe an die Luft über längere Zeiträume hinweg zu erreichen. Außerdem kann der Wirkstoff aus geeigneten Behältern, z.B. Kapillaren oder anderen Gefäßen, durch enge Öffnungen oder durch Diffusion durch die Behälterwand sowie aus mehrschichtigen Kunststoffplättchen, sogenannten Flakes, zur Verdunstung gebracht werden, wodurch über längere Zeiträume hinweg besonders gleichmäßige Duftkonzentrationen erzielt werden.

Der Gehalt dieser Zubereitungen an Gemisch kann innerhalb weiter Grenzen schwanken. Generell kann das Verhältnis Wirkstoff:Zusatzstoff z.B. im Bereich von 10:1 bis 1:10³ liegen. In Kapselformulierungen oder anderen geeigneten Behältern kann z.B. der Wirkstoff in reiner, unverdünnter Form angewendet werden und sein Gewichtsanteil, bezogen auf die Gesamtformulierung, sehr hoch sein und bis zu 90 % betragen. Im allgemeinen genügen jedoch sehr geringe Wirkstoffkonzentrationen in den Zubereitungen, um die gewünschte Wirkung auf Leopardenmotten-Männchen auszuüben. Bevorzugt ist ein Mengenverhältnis Wirkstoff:Zusatzstoff von 1:3 bis 1:10², insbesondere 1:10 bis 1:100.

### Herstellungsbeispiele

### Beispiel 1: (Z,E)-8-Tetradecenol

Eine Mischung aus 17 kg Triphenylphosphin und 13,3 kg 8-Bromoctanol (technisch) wurden in 25,5 l Dimethylformamid 6 h bei 110°C gerührt und anschließend bei 25°C portionsweise mit 5,3 kg Natriummethylat versetzt und 1 h bei dieser Temperatur belassen. Zu dieser Mischung wurden dann unter Kühlen auf 20-30°C 6,5 kg Hexanal gegeben. Nach vollendeter Umsetzung (ca. 12 h) wurde das Reaktionsgemisch mit 17,8 l Wasser versetzt. Nach Destillation erhielt man aus der organischen Phase 6,95 kg (Z,E)8-Tetradecenol (Siedebereich: 110-150°C/1 mbar), welches ohne weitere Reinigung weiter umgesetzt wurde.

### Beispiel 2: (Z,E)-8-Tetradecenylacetat

500 g Tetradecenol wurde bei 100°C mit 350 g Essigsäureanhydrid versetzt. Die Mischung wurde dann 2 weitere h bei dieser Temperatur gehalten und anschließend durch Destillation bei vermindertem Druck vorgereinigt. Nach Destillation des Rückstands erhielt man 433 g (Z,E)-8-Tetradecenylacetat (Siedepunkt: 130°C/1 mbar; Isomerenzusammensetzung: Z:E = 9:1).

### Anwendungsbeispiele

Der synthetisch hergestellte Pheromonwirkstoff (Zusammensetzung: 90 % Z8-Tetradecenylacetat, 10% E8-Tetradecenylacetat) wird in Kunststoffampullen abgefüllt (Beschreibung siehe DE-OS 36 40 880). Abfüllmenge: 250 mg pro Ampulle. Der Wirkstoff diffundiert in der Zielkultur langsam durch die Ampullenwand.

Die Ampullen wurden in einer 4,5 ha großen Apfelanlage ausgebracht. (Pro Hektar 500 Ampullen). Die Belegung der Bäume erfolgte in der ersten Maidekade. Als Vergleichsfläche diente eine 0,8 km entfernte integriert bewirtschaftete Obstanlage. Durch die räumliche Nähe und die gleiche Kulturführung ist eine relative Vergleichbarkeit der Anlagen gegeben. In beiden Anlagen wurde ans Auftreten von S. ocellana durch Kontrolle der Pheromonfallen zwei bis dreimal pro Woche erfaßt. Gesamtzahl der S. ocellana-Falter die in Pheromonfallen gefangen wurden.

| | Bibonacker | Fuchsberg |
|---|---|---|
| 1990 | 79 | 34 |
| 1991 | 25 | 30 |
| 1992 | 0 | 81 |

In der Versuchsanlage Bibonacker wurde 1992 zum ersten Mal das Pheromon von S. ocellana ausgebracht. Die Vergleichsfläche Fuchsberg wird integriert bewirtschaftet.

Fruchtschäden durch Fruchtschalenwickler in % bei der Ernte:

| | Bibonacker [%] | Fuchsberg [%] |
|---|---|---|
| 1990 | 2,83 | 2,77 |
| 1991 | 3,61 | 4,89 |
| 1992 | 0,71 | 3,19 |

Die Ausbringung des Pheromons bewirkte, daß keine S. ocellana-Falter in der Pheromonfallen gefunden wurden. Der Bekämpfungserfolg wird durch den geringen Furchtschaden zur Erntezeit nachgewiesen.

## Patentansprüche

1. Verfahren zur Bekämpfung von Planzenschädlingen aus der Ordnung Lepidoptera mittels eines synthetischen Gemisches aus Z8-Tetradecenylacetat (Ia) und E8-Tetradecenylacetat (Ib), dadurch gekennzeichnet, daß man im Lebensraum der Planzenschädlinge aus der Ordnung Lepidoptera ein synthetisches Gemisch aus Z8-Tetradecenylacetat (Ia) und E8-Tetradecenylacetat (Ib) in einer solchen Menge ausbringt, daß die männlichen Tiere bei der Auffindung der weiblichen Tiere gestört werden.

2. Verfahren zur Bekämpfung des Roten Knospenwicklers (Spilonota ocellana), mittels eines synthetischen Gemisches aus Z8-Tetradecenylacetat (Ia) und E8-Tetradecenylacetat (Ib), dadurch gekennzeichnet, daß man im Lebensraum des Roten Knospenwicklers (Spilonota ocellana) ein synthetisches Gemisch aus Z8-Tetradecenylacetat (Ia) und E8-Tetradecenylacetat (Ib) in einer solchen Menge ausbringt, daß die männlichen Tiere bei der Auffindung der weiblichen Tiere gestört werden.

3. Verfahren zur Bekämpfung von Pflanzenschädlingen gemäß den Ansprüchen 1 und 2, dadurch gekennzeichnet, daß das synthetische Gemisch aus Z8-Tetradecenylacetat (Ia) und E8-Tetradecenylacetat (Ib) zusätzlich Tetradecanol, Pentadecanol, Tetradecanylacetat und/oder Pentadecanylacetat enthält.

4. Verwendung einer synthetischen Mischung aus Z8-Tetradecenylacetat (Ia) und E8-Tetradecenylacetat (Ib) zur Bekämpfung von Planzenschädlingen aus der Ordnung Lepidoptera mittels der Paarungsstörungsmethode.

5. Verwendung einer synthetischen Mischung aus Z8-Tetradecenylacetat (Ia) und E8-Tetradecenylacetat (Ib) zur Bekämpfung des Roten Knospenwicklers (Spilonota ocellana) mittels der Paarungsstörungsmethode.

6. Verwendung einer synthetischen Mischung aus Z8-Tetradecenylacetat (Ia) und E8-Tetradecenylacetat (Ib) zur Bekämpfung von Planzenschädlingen gemäß den Ansprüchen 4 und 5, dadurch gekennzeichnet, daß die synthetische Mischung aus Z8-Tetradecenylacetat (Ia) und E8-Tetradecenylacetat (Ib) zusätzlich Tetradecanol, Pentadecanol, Tetradecanylacetat und/oder Pentadecanylacetat enthält.

7. Verfahren zur Herstellung einer synthetischen Mischung aus Z8-Tetradecenylacetat (Ia) und E8-Tetradecenylacetat (Ib), dadurch gekennzeichnet, daß man Hexanal (II)
H₃C-(CH₂)₄-CHO II
in an sich bekannter Weise in Gegenwart einer Base mit 8-Hydroxyoctyl-triphenylphosphoniumbromid (III)
(C₆H₅)₃P⁺-CH₂-(CH₂)₇-OHBr⁻ III
in eine Mischung aus Z8-Tetradecenol IVa und Z8-Tetradecenol IVb 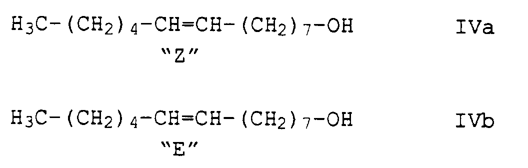 überführt und diese Mischung anschließend in an sich bekannter Weise mit Essigsäureanhydrid acetyliert.

## Claims

1. A method for controlling plant pests of the order Lepidoptera by means of a synthetic mixture of Z8-tetradecenyl acetate (Ia) and E8-tetradecenyl acetate (Ib), wherein a synthetic mixture of Z8-tetradecenyl acetate (Ia) and E8-tetradecenyl acetate (Ib) is applied to the habitat of the plant pests of the order Lepidoptera in a quantity such that the males are interrupted from finding the females.

2. A method for controlling the apple bud moth (Spilonota ocellana) by means of a synthetic mixture of Z8-tetradecenyl acetate (Ia) and E8-tetradecenyl acetate (Ib), wherein a synthetic mixture of Z8-tetradecenyl acetate (Ia) and E8-tetradecenyl acetate (Ib) is applied to the habitat of the apple bud moth (Spilonota ocellana) in a quantity such that the males are interrupted from finding the females.

3. A method for controlling plant pests as claimed in claims 1 and 2, wherein the synthetic mixture of Z8-tetradecenyl acetate (Ia) and E8-tetradecenyl acetate (Ib) additionally contains tetradecanol, pentadecanol, tetradecanyl acetate and/or pentadecanyl acetate.

4. The use of a synthetic mixture of Z8-tetradecenyl acetate (Ia) and E8-tetradecenyl acetate (Ib) for controlling plant pests of the order Lepidoptera by means of the mating disruption method.

5. The use of a synthetic mixture of Z8-tetradecenyl acetate (Ia) and E8-tetradecenyl acetate (Ib) for controlling the apple bud moth (Spilonota ocellana) by means of the mating disruption method.

6. The use of a synthetic mixture of Z8-tetradecenyl acetate (Ia) and E8-tetradecenyl acetate (Ib) for controlling plant pests as claimed in claims 4 and 5, wherein the synthetic mixture of Z8-tetradecenyl acetate (Ia) and E8-tetradecenyl acetate (Ib) additionally contains tetradecanol, pentadecanol, tetradecanyl acetate and/or pentadecanyl acetate.

7. A process for preparing a synthetic mixture of Z8-tetradecenyl acetate (Ia) and E8-tetradecenyl acetate (Ib), which comprises converting hexanal (II)
H₃C-(CH₂)₄-CHO II
in a manner known per se in the presence of a base using 8-hydroxyoctyltriphenylphosphonium bromide (III)
(C₆H₅)₃P⁺-CH₂-(CH₂)₇-OHBr⁻ III
to a mixture of Z8-tetradecenol IVa and Z8-tetradecenol IVb 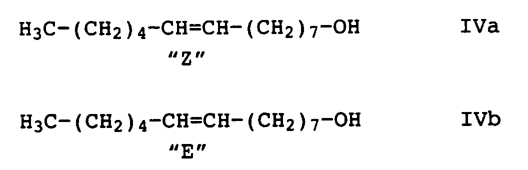 and then acetylating this mixture in a manner known per se using acetic anhydride.

## Revendications

1. Procédé de lutte contre les parasites des plantes de l'ordre des lépidoptères au moyen d'un mélange synthétique de Z8-acétate de tétradécényle (Ia) et de E8-acétate de tétradécényle (Ib), caractérisé par le fait que l'on répand dans la biotope des parasites des plants de l'ordre des lépidoptères un mélange synthétique de Z8-acétate de tétradécényle (Ia) et de E8-acétate de tétradécényle (Ib) en quantité telle que les animaux mâles soient détruits en dénichant les animaux femelles.

2. Procédé de luttre contre la tordeuse des bourgeons (Spilonota Ocellana) au moyen d'un mélange synthétique de Z8-acétate de tétradécényle (Ia) et de E8-acétate de tétradécényle (Ib), caractérisé par le fait que l'on répand dans le biotope de la tordeuse des bourgeons (Spilonota Ocellana) un mélange synthétique de Z8-acétate de tétradécényle (Ia) et de E8-acétate de tétradécényle (Ib) en quantité telle que les animaux mâles soient détruits en dénichant les animaux femelles.

3. Procédé de lutte contre les parasites des plantes selon les revendications 1 et 2, caractérisé par le fait que le mélange synthétique de Z8-acétate de tétradécényle (Ia) et de E8-acétate de tétradécényle (Ib) contient en outre du tétradécanole, pentadécanole, acétate de tétradécanyle et/ou acétate de pentadécanyle.

4. Utilisation d'un mélange synthétique de Z8-acétate de tétradécényle (Ia) et de E8-acétate de tétradécényle (Ib) pour la lutte contre les parasites des plantes de l'ordre des lépidoptères, au moyen de la méthode de perturbation d'accouplement.

5. Utilisation d'un mélange synthétique de Z8-acétate de tétradécényle (Ia) et de E8-acétate de tétradécényle (Ib) pour la lutte contre la tordeuse des bourgeons (Spilonota Ocellana) au moyen de méthode de perturbation d'accouplement.

6. Utilisation d'un mélange synthétique de Z8-acétate de tétradécényle (Ia) et de E8-acétate de tétradécényle (Ib) pour la lutte contre les parasites des plantes selon les revendications 4 et 5, caractérisée par le fait que le mélange synthétique de Z8-acétate de tétradécényle (Ia) et de E8-acétate de tétradécényle (Ib) contient en outre du tétradécanole, pentadécanole, acétate de tétradécanyle et/ou acétate de pentadécanyle.

7. Procédé de préparation d'un mélange synthétique de Z8-acétate de tétradécényle (Ia) et de E8-acétate de tétradécényle (Ib), caractérisé par le fait que l'on amène de l'hexanol (II)
H₃C-(CH₂)₄-CHO II
de manière connue en soi, en présence d'une base, avec du bromure de 8-hydroxyoctyl-triphénylphosphonium III
(C₆H₅)₃P⁺-CH₂-(CH₂)₇-OHBr⁻ III
dans un mélange de Z8-tétradécanol IVa et E8-tétradécanol IVb 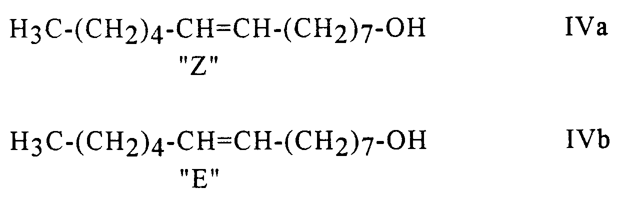 et on acétyle ensuite ce mélange de manière connue en soi, avec de l'anhydride d'acide acétique.
